(19) Europäisches Patentamt
European Patent Office
Office européen des brevets

(11) EP 0 737 709 B1

(12) # FASCICULE DE BREVET EUROPEEN

(45) Date de publication et mention de la délivrance du brevet:
**04.02.2004 Bulletin 2004/06**

(21) Numéro de dépôt: **96400614.2**

(22) Date de dépôt: **22.03.1996**

(51) Int Cl.7: **C08J 5/18**, C08L 77/00, C08L 77/12, C08L 23/04 // C08L77:00, C08L77:12, C08L23:04

(54) **Emballage à base de polymère à blocs polyamides et blocs polyéther pour conserver les produits frais**

Verpackung aus Polymeren mit Polyamid- und Polyetherblöcken zum Frischhalten von Produkten

Packaging from polymers containing polyamide and polyether blocks for keeping freshness of products

(84) Etats contractants désignés:
**AT BE CH DE DK ES FI FR GB GR IE IT LI LU NL PT SE**

(30) Priorité: **11.04.1995 FR 9504324**

(43) Date de publication de la demande:
**16.10.1996 Bulletin 1996/42**

(73) Titulaire: **Atofina**
**92800 Puteaux (FR)**

(72) Inventeurs:
- **Frey, Alain**
**27300 St-Leger de Rôtes (FR)**
- **Leroux, Roland**
**92370 Chaville (FR)**
- **Fischer, Laurent**
**27470 Serquigny (FR)**

(74) Mandataire: **Neel, Henry et al**
**Atofina**
**D.C.R.D./D.P.I.**
**4, Cours Michelet**
**La Défense 10**
**92091 Paris La Défense Cedex (FR)**

(56) Documents cités:
**EP-A- 0 116 288**
**EP-A- 0 378 015**
**EP-A- 0 459 862**
**EP-A- 0 461 966**
**EP-A- 0 476 895**
**EP-A- 0 504 058**
**EP-A- 0 559 284**
**FR-A- 2 519 012**
**US-A- 4 808 675**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un emballage à base de polymère à blocs polyamides et blocs polyéther derivant du polyethylene glycol pour conserver les produits frais tels que les fruits et légumes ou la viande fraîchement découpée.
Elle est particulièrement utile pour conserver aux fruits ou aux légumes qu'on vient de récolter leur saveur et aussi pour prévenir leur dégradation.
La demande de brevet canadien CA 1 324 476 a décrit des sachets pour les salades (laitues) constitués d'un premier film perforé et d'un deuxième film collé au premier.
Le film perforé peut être en polyéthylène, polypropylène, polyester étiré ou polyamide étiré. Le deuxième film est lui-même un multicouche comprenant successivement un film de copolymère éthylène / acétate de vinyle (EVA), un film central perméable à l'oxygène et un film scellable à chaud.
La demande de brevet japonais JP 05 230 235 (KOKAI) a décrit des films perforés constitués d'un mélange de polyéthylène basse densité, de polyamide 6 et de polyéthylène maléisé. Ces films perforés ont une bonne perméabilité à l'oxygène et à la vapeur d'eau. On en fait des sachets pour conserver les champignons fraîchement cueillis.
La demande de brevet japonais JP 03 180 124 a décrit des sachets en film perméable à la vapeur d'eau à l'air et à l'éthylène pour faire mûrir les pêches sur l'arbre.
Le film est constitué d'un mélange de polyoléfines et de charges telles que du carbonate de calcium ou de la silice, puis le film est étiré pour créer des vides entre la polyoléfine et les charges.
La demande de brevet EP 378015 A1 décrit en page 3, l. 45 - 46 des films de copolymères à blocs polyamides et blocs polyéthers qui contiennent des substances actives et qu'on utilise comme patch transdermiques. Ces médicaments sont donc dans la masse du film et non pas dans un emballage constitué d'un film.
La demande de brevet EP 459862 A1 décrit des films mono ou multicouches contenant au moins une couche à base de copolymère à blocs polyamides et blocs polyéthers pour faire des objets très divers. Les emballages sont cités, mais sans référence, à la conservation de produits frais. Dans tous les exemples les blocs polyéthers sont en PTMG, le PEG n'est cité que pour les propriétés antistatiques. Les fims antistatiques sont plus faciles à manipuler mais ceci n'a rien à voir avec le problème technique de la conservation des produits frais.
Le but de l'invention est aussi un film continu non perforé. Le film de l'invention est ainsi étanche aux bactéries et micro organismes à la différence des films perforés.
La demanderesse a découvert que des films à base de polymère à blocs polyamide et blocs polyéther derivant du polyethylene glycol possèdent ces propriétés. La présente invention est donc des emballages pour conserver les produits frais comprenant un film thermoplastique à base d'un polymère à blocs polyamides et blocs polyéther, dérivant du polyéthylène glycol perméable (i) à la vapeur d'eau, à l'éthylène, au $CO_2$ et à l'oxygène et tel que (ii) la perméabilité au $CO_2$ est très supérieure à celle de l'oxygène, ces emballages étant :

- soit des sachets fermés constitués du film thermoplastique
- soit des sachets fermés constitués d'un matériau quelconque et ayant une fenêtre constituée du film thermoplastique
- soit des pots ou barquettes recouverts du film thermoplastique

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12.
La masse molaire en nombre $\overline{M_n}$ des séquences polyamides est comprise entre 300 et 15 000 et de préférence entre 600 et 5 000. La masse $\overline{M_n}$ des séquences polyéther est comprise entre 100 et 6 000 et de préférence entre 200 et 3 000.
Les polymères à blocs polyamides et blocs polyéthers peuvent aussi comprendre des motifs répartis de façon aléatoire. Ces polymères peuvent être préparés par la réaction simultanée du polyéther et des précurseurs des blocs

polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Que les blocs polyéthers dérivent du polyéthylène glycol, du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide. et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol ($-OC_2H_4-$), du propylène glycol

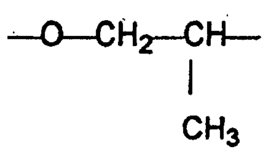

ou encore du tétraméthylène glycol ($-O-(CH_2)_4-$).

De préférence, le polymère à blocs polyamides et blocs polyéther comprend un seul type de bloc polyamide et un seul type de blocs polyéther. On utilise avantageusement des polymères à blocs PA-12 et blocs PEG.

Les polymères à blocs PEG ont une perméabilité à la vapeur d'eau beaucoup plus importante que celle des polymères à blocs PTMG.

On peut aussi utiliser un mélange de ces deux polymères à blocs polyamides et blocs polyéther.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 40 % en poids ou plus du polymère à blocs polyamide et blocs polyéther. Avantageusement, la quantité de polyamide et la quantité de polyéther sont dans le rapport (polyamide/polyéther) 1/1 à 3/1 et de préférence :

Les films de l'invention ont une épaisseur par exemple comprise entre 10 et 150 µm.

Le film de l'invention peut aussi comprendre des plastifiants, des anti oxydants ou des anti U.V.

Selon une forme avantageuse, le film de l'invention comprend aussi des polyoléfines. On entend par polyoléfines des polymères comprenant des motifs oléfines tels que par exemple des motifs éthylène, propylène, butène-1, etc.

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène / styrène (SEBS) éventuellement maléisés.

On peut utiliser des mélanges de deux ou plusieurs de ces polyoléfines.
On utilise avantageusement :

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,

Il est recommandé, si les polyoléfines ont peu ou pas de fonctions pouvant faciliter la compatibilisation, d'ajouter un agent compatibilisant.
L'agent compatibilisant est un produit connu en soi pour compatibiliser les polyamides et les polyoléfines.
On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le polypropylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.
La quantité de compatibilisant est la quantité suffisante pour que la polyoléfine se disperse par exemple sous forme de nodules dans le polymère à blocs polyamide et blocs polyéther. Elle peut représenter jusqu'à 20 % du poids de la polyoléfine. On fabrique ces mélanges de polymère à blocs polyamide et blocs polyéther, de polyoléfine et éventuellement de compatibilisant selon les techniques usuelles de mélange à l'état fondu (bi vis, Buss, monovis).
Avantageusement, le film thermoplastique de l'invention comprend :

a) un polymère à blocs polyamide et blocs polyéther PEG, le polyamide étant de préférence du PA-12 ;
b) un copolymère de l'éthylène et d'un (méth)acrylate d'alkyle ;
c) un copolymère éthylène / (méth)acrylate d'alkyle / anhydride maléique.

Les proportions préférées sont de :

60 à 80 parties de a)
20 à 30 parties de b)
et 0 à 10 parties de c)

Selon une autre forme avantageuse de l'invention, le film thermoplastique comprend :

a) un polymère à blocs polyamide et blocs PEG, le polyamide étant de préférence du PA-12.
b) un polyéthylène ou un copolymère de l'éthylène et d'une alpha oléfine.
c) un copolymère de l'éthylène et de l'acétate de vinyle (EVA) greffé par l'anhydride maleique.

Les proportions préférées sont de 25 à 35 parties de (a) pour 65 à 75 parties de (b) plus (c).
Ces films comprenant de l'EVA sont aussi des produits nouveaux en eux-mêmes, qu'ils soient utilisés pour faire des emballages ou pour toute autre application.
Le rapport de la perméabilité en volume du $CO_2$ à l'$O_2$ est supérieur à 8 et de préférence comprise entre 10 et 15, ces valeurs sont valables à 0 % d'humidité relative (0% RH) et 23° C.

La perméabilité au $CO_2$ en ml/m$^2$ 24 h. atm est comprise entre 15 000 et 80 000 à 0 % RH et 23° C pour un film de 25 µm.

La perméabilité à l'oxygène en ml/m$^2$ 24h.atm est comprise entre 1 200 et 8 000 à 0 % RH et 23° C pour un film de 25 µm.

La perméabilité à l'azote en ml/m$^2$ 24 h.atm est comprise entre 300 et 3 500 à 0 % RH et 23° C pour un film de 25 µm.

La perméabilité à la vapeur d'eau en g/m$^2$/24 h mesurée selon la norme ASTM E 96 BW à 38° C et 50 % RH est entre 2 000 et 25 000 et de préférence entre 15 000 et 20 000.

La perméabilité à la vapeur d'eau et aux autres gaz augmente avec la quantité de blocs PEG ou de motifs $(—O—(CH_2)_4—)$ dans le bloc polyéther du polymère à blocs polyamide et blocs polyéther.

Les sachets hermétiques fabriqués avec le film de l'invention ou les films permettent de maintenir les fruits ou légumes qui sont à l'intérieur dans une atmosphère contenant en volume 3 à 5 % d'$O_2$, 3 à 5 % de $CO_2$, des traces d'éthylène et une quantité de vapeur d'eau telle qu'il n'y a pas de buée à la surface intérieur du sac du fait de la grande perméabilité à la vapeur d'eau.

Ceci est un autre avantage de l'invention, en effet, la buée est souvent le lieu de développement de bactéries. Un autre avantage du film de l'invention est sa transparence. La propriété anti buée (anti fogging) est très importante pour les produits frais humides tels que la viande.

Selon une autre forme de l'invention, le film thermoplastique à base d'un polymère à blocs polyamide et blocs polyéther peut être coextrudé ou laminé sur un support tel qu'un grillage en polyéthylène ou en PVC. Ceci permet d'avoir une résistance mécanique sans modifier les perméabilités.

Selon une autre forme de l'invention, le film de l'invention n'est qu'une partie d'un emballage, l'autre partie étant réalisée en un matériau n'ayant pas les propriétés du film de l'invention. Par exemple, on réalise une fenêtre dans un film de l'invention dans un emballage en PVC, polyéthylène, carton, papier, etc.

On ne sortirait pas du cadre de l'invention, si ces films sont utilisés pour faire des sachets dans lesquels on emballe les fruits avant la récolte et même pendant toute la période du développement et du mûrissement. Le fruit est protégé des parasites, du contact avec les herbicides ou bactéricides qu'on peut éventuellement répandre sur les feuilles des arbres, des oiseaux, de la grêle et des intempéries.

***Exemples***

Le produit 1 est un polymère à blocs de polyamide 12 (PA-12) de masse $\overline{M_n}$ = 1 500 et blocs polyéthylène glycol de masse $\overline{M_n}$ = 1500.

Le rapport massique PA-12 / PEG est 50/50. La viscosité intrinsèque mesurée à 20° C dans le métacrésol est 1,45 à 1,60.

Le produit 2 est comme le précédent sauf la masse $\overline{M_n}$ des blocs PA-12 qui vaut 4 500. Le rapport massique PA-12/PEG vaut 75/25.

La viscosité intrinsèque mesurée à 20° C dans le métacrésol est 1,40 à 1,55.

Le produit 3 est un mélange de :

- 65 parties du produit 1
- 25 parties d'un copolymère éthylène / acrylate de méthyle à 24 % en poids d'acrylate et de MFi 0,5.
- 10 parties d'un copolymère éthylène / ester acrylique / anhydride maléique à 19 % en poids d'acrylate et 3 % en poids de maléique.

Le produit 4 est un polymère à blocs de PA-12 de masse $\overline{M_n}$ = 1 000 et blocs PTMG de masse $\overline{M_n}$ = 1 000.

Le produit 5 est un polymère à blocs de PA-12 de masse $\overline{M_n}$ = 2 000 et blocs PTMG de masse $\overline{M_n}$ = 2 000.

On réalise les mélanges précédents sur BUSS ou WERNER et on extrude des films.

Les conditions de mesure sont les suivantes :

| | |
|---|---|
| Appareil: | LYSSY GPM 200 |
| Surface de test | 50 cm$^2$ |
| Détection | chromatographie gaz, conductibilité thermique (W2X) |
| Température | 23° C |
| Humidité relative | 0 % |
| Gaz support | Helium (pression : 1 bar) |
| Gaz diffusants | O2 + N2 + $CO_2$ (1/3, 1/3, 1/3) (pression totale : 1 bar) |

On mesure la perméabilité à la vapeur d'eau selon la méthode décrite dans la norme ASTM E 96 méthode BW (film en contact avec l'eau) dans une étuve Heraous Votsch des conditions de température = 38° C et d'humidité relative ambiante = 50 % maintenus durant toute la durée de la mesure.

Le résultat de perméabilité à la vapeur d'eau est donnée en g/$m^2$/24h. Les imprécisions sur la mesure donnent un résultat à plus ou moins 10 à 15 %. Les résultats sont rassemblés sur le tableau 1.

Tableau 1

| Produit | Epaisseur (µm) du film | CO2 ml/$m^2$.24h.atm | O2 ml/$m^2$.24h.atm | N2 ml/$m^2$.24h.atm | Vapeur d'eau g/$m^2$.24h |
|---|---|---|---|---|---|
| Produit 1 | 25 | > 73 000 | 5 600 | 2100 | 23 000 |
| Produit 1 | 50 | > 34 000 | 2 300 | 820 | 23 000 |
| Produit 3 | 25 | > 75 000 | 7 900 | 3 000 | 11 000 |
| Produit 2 | 25 | > 35 000 | 2 700 | 930 | 12 000 |
| Produit 2 | 50 | > 19 000 | 1 500 | 500 | 12 000 |
| Produit 4 | 25 | > 81 000 | 10 000 | 3 900 | 1 000 à 2 000 |
| Produit 4 | 35 | > 42 000 | 6 000 | 2 200 | " |
| Produit 5 | 25 | > 54 000 | 10 000 | 4 000 | " |

## Revendications

**1.** Emballages pour conserver les produits frais comprenant un film thermoplastique à base d'un polymère à blocs polyamides et blocs polyéther, dérivant du polyéthylène glycol perméable (i) à la vapeur d'eau, à l'éthylène, au $CO_2$ et à l'oxygène et tel que (ii) la perméabilité au $CO_2$ est très supérieure à celle de l'oxygène, ces emballages étant :

- soit des sachets fermés constitués du film thermoplastique
- soit des sachets fermés constitués d'un matériau quelconque et ayant une fenêtre constituée du film thermoplastique
- soit des pots ou barquettes recouverts du film thermoplastique.

**2.** Emballage selon la revendication 1 dans lequel le film comprend aussi des polyoléfines.

**3.** Emballage selon la revendication 2 dans lequel le film comprend :

a) un polymère à blocs polyamide et blocs PEG ;
b) un copolymère de l'éthylène et d'un (méth)acrylate d'alkyle ;
c) un copolymère éthylène / (méth)acrylate d'alkyle / anhydride maléique.

**4.** Emballage selon la revendication 2 dans lequel le film comprend :

a) un polymère à blocs polyamide et blocs PEG ;
b) un polyéthylène ou un copolymère de l'éthylène et d'une alpha oléfine ;
c) un copolymère de l'éthylène et de l'acétate de vinyle (EVA) greffé par l'anhydride maléique.

**5.** Emballage selon l'une quelconque des revendications précédentes dans lequel le rapport de la perméabilité en volume du $CO_2$ sur celle de l'$O_2$ est supérieur à 8, la mesure étant effectuée sur un appareil LYSSY GPM 200 à 23°C et 0 % d'humidité relative avec l'helium gaz support.

**6.** Film comprenant :

a) un polymère à blocs polyamide et blocs PEG ;
b) un polyéthylène ou un copolymère de l'éthylène et d'un alpha oléfine ;
c) un copolymère de l'éthylène et de l'acétate de vinyle (EVA) greffé par l'anhydride maléique.

## Patentansprüche

1. Verpackungen zur Konservierung von Frischprodukten, die eine thermoplastische Folie auf Basis eines Polymers mit Polyamidblöcken und von Polyethylenglykol abgeleiteten Polyetherblöcken, die für (i) Wasserdampf, Ethylen, $CO_2$ und Sauerstoff durchlässig ist und so beschaffen ist, daß (ii) die $CO_2$-Durchlässigkeit viel größer als die Sauerstoffdurchlässigkeit ist, enthalten und bei denen es sich um:

   - geschlossene Beutel aus der thermoplastischen Folie,
   - geschlossene Beutel aus einem beliebigen Material mit einem Fenster aus der thermoplastischen Folie oder
   - mit der thermoplastischen Folie bedeckte Becher oder Schalen

   handelt.

2. Verpackung nach Anspruch 1, bei dem die Folie außerdem Polyolefine enthält.

3. Verpackung nach Anspruch 2, bei der die Folie:

   a) ein Polymer mit Polyamidblöcken und PEG-Blöcken;
   b) ein Copolymer von Ethylen und einem Alkyl(meth)acrylat;
   c) ein Ethylen/Alkyl(meth)acrylat/Maleinsäureanhydrid-Copolymer

   enthält.

4. Verpackung nach Anspruch 2, bei der die Folie:

   a) ein Polymer mit Polyamidblöcken und PEG-Blöcken;
   b) ein Polyethylen oder ein Copolymer von Ethylen und einem alpha-Olefin;
   c) ein mit Maleinsäureanhydrird gepfropftes Copolymer von Ethylen und Vinylacetat (EVA)

   enthält.

5. Verpackung nach einem der vorhergehenden Ansprüche, bei der das Verhältnis von volumenbezogener $CO_2$-Durchlässigkeit zu volumenbezogener $O_2$-Durchlässigkeit größer als 8 ist, wobei die Messung auf einer Apparatur LYSSY GPM 200 bei 23°C und 0% relativer Feuchte mit Helium als Trägergas erfolgt.

6. Folie, die

   a) ein Polymer mit Polyamidblöcken und PEG-Blöcken;
   b) ein Polyethylen oder ein Copolymer von Ethylen und einem alpha-Olefin;
   c) ein mit Maleinsäureanhydrid gepfropftes Copolymer von Ethylen und Vinylacetat (EVA)

   enthält.

## Claims

1. Packaging for conserving fresh produce, comprising a thermoplastic film based on a polymer containing polyamide blocks and polyether blocks, which derives from polyethylene glycol and is permeable (i) to water vapour, to ethylene, to $CO_2$ and to oxygen and such that (ii) the permeability to $CO_2$ is very much greater than that to oxygen, such packaging being:

   - either closed sachets consisting of the thermoplastic film
   - or closed sachets consisting of any material and having a window consisting of the thermoplastic film
   - or pots or trays covered with the thermoplastic film.

2. Packaging according to Claim 1, in which the film also comprises polyolefins.

3. Packaging according to Claim 2, in which the f ilm comprises:

a) a polymer containing polyamide blocks and PEG blocks;
b) a copolymer of ethylene and an alkyl (meth)acrylate;
c) an ethylene/alkyl (meth)acrylate/maleic anhydride copolymer.

**4.** Packaging according to Claim 2, in which the film comprises:

a) a polymer containing polyamide blocks and PEG blocks;
b) a polyethylene or a copolymer of ethylene and an alpha-olefin;
c) a copolymer of ethylene and vinyl acetate (EVA) which is grafted with maleic anhydride.

**5.** Packaging according to any one of the preceding claims, in which the ratio of the permeability, by volume, of the $CO_2$ to that of the $O_2$ is greater than 8, as measured on a Lyssy GPM 200 machine at 23°C and 0% relative humidity with helium carrier gas.

**6.** Film comprising:

a) a polymer containing polyamide blocks and PEG blocks;
b) a polyethylene or a copolymer of ethylene and an alpha-olefin;
c) a copolymer of ethylene and vinyl acetate (EVA) which is grafted with maleic anhydride.